# EUROPEAN PATENT SPECIFICATION

(11) **EP 4 467 624 B1**
(45) Date of publication and mention of the grant of the patent: **12.08.2026**
(21) Application number: 24204961.7
(22) Date of filing: 17.12.2020
(51) Int. Cl.: B32B 27/00, H01G 11/78, H01M 10/0562, H01M 10/0585, H01M 50/10, H01M 50/183, B32B 7/12, C08G 18/42, C08G 18/44, C08G 18/48, C08G 18/62, C08G 18/76, C08G 18/64, C08G 18/79, C08G 18/80, C09J 175/02, C09J 175/06, C09J 175/08, B32B 15/08, B32B 15/088, B32B 15/09, B32B 15/20, B32B 27/32, B32B 27/36

(54) **POWER STORAGE DEVICE PACKAGING MATERIAL AND POWER STORAGE DEVICE USING THE SAME**
VERPACKUNGSMATERIAL FÜR ENERGIESPEICHERVORRICHTUNG UND ENERGIESPEICHERVORRICHTUNG DAMIT
MATÉRIAU D'ENCAPSULATION DE DISPOSITIF DE STOCKAGE D'ÉNERGIE ET DISPOSITIF DE STOCKAGE D'ÉNERGIE L'UTILISANT

(30) Priority: 27.12.2019 JP 2019239358; 27.12.2019 JP 2019239385; 06.04.2020 JP 2020068509; 13.04.2020 JP 2020071561; 10.07.2020 JP 2020119066
(43) Date of publication of application: 27.11.2024
(62) Document number(s) of the earlier application(s) in accordance with Art. 76 EPC: 20907484.8 / 4 082 778
(73) Proprietor: TOPPAN INC., Tokyo 110-0016 (JP)
(72) Inventor: Numazawa, Taketo, Tokyo, 110-0016 (JP); Yamazaki, Tomohiko, Tokyo, 110-0016 (JP); Murata, Koji, Tokyo, 110-0016 (JP); Muraki, Takuya, Tokyo, 110-0016 (JP)
(74) Representative: Hoffmann Eitle

(56) References cited:
- EP-A1- 3 116 044
- EP-A1- 3 413 371
- EP-A1- 3 439 067
- WO-A1-2013/046889
- WO-A1-2014/068986
- WO-A1-2018/025924
- WO-A1-2018/117080
- WO-A1-2019/054008
- JP-A- 2016 124 877
- JP-A- 2019 117 706

## Description

### [Technical Field]

The present disclosure relates to a power storage device packaging material and a power storage device using the same.

### [Background Art]

Known power storage devices include secondary batteries such as lithium-ion batteries, nickel hydride batteries and lead batteries, and electrochemical capacitors such as electric double layer capacitors. Due to miniaturization of mobile devices, limitation of installation spaces, or the like, further miniaturization of power storage devices is sought, and thus attention is given to lithium-ion batteries for their high energy density. Metal cans that have been used for packaging materials for lithium-ion batteries are being replaced by multilayer films due to their light weight, high heat dissipation, and low manufacturing cost.

Lithium-ion batteries using such a multilayer film as a packaging material are called laminated lithium-ion batteries. The packaging material covers the battery contents (e.g., cathode, separator, anode, electrolyte solution) and prevents moisture from infiltrating into the battery. Laminated lithium-ion batteries are manufactured by, for example, forming a recess in part of the packaging material by cold forming, accommodating the battery contents in the recess, folding back the remaining part of the packaging material, and sealing the edge portions by heat-sealing (see, for example, PTL 1).

PTL 2 relates to an adhesive which enables the formation of a packaging material for batteries. Said packaging material is stated to have excellent moldability and high adhesive strength even after long-term endurance test. A polyurethane adhesive for packaging materials for batteries contains a base material and a polyisocyanate curing agent. The base material contains: (A) a polyol component that contains (A1) a polyester polyol having a glass transition temperature of 40°C or more and (A2) a polyester polyol having a glass transition temperature of less than 40°C at a specific composition ratio; and (B) a silane coupling agent.

PTL 3 to 10 relate to packaging materials for power storage devices comprising adhesives and PTL 11 relates to a polyurethane adhesive agent containing a polyester polyol as the main ingredient.

### [Citation List]

### [Patent Literature]

[PTL 1] JP 2013-101765 A
[PTL 2] WO 2014/068986 A1
[PTL 3] JP 2019 117706 A
[PTL 4] WO2018/025924 A1
[PTL 5] WO2019/054008 A1
[PTL 6] WO2018/117080 A1
[PTL 7] EP 3 439 067 A1
[PTL 8] EP 3 413 371 A1
[PTL 9] EP 3 116 044 A1
[PTL 10] JP 2016 124877 A
[PTL 11] WO 2013/046889 A1

### [Summary of the Invention]

### [Technical Problem]

As the next generation batteries replacing lithium-ion batteries, research and development have been made on power storage devices called fully solid-state batteries. The fully solid-state batteries are characterized in that they use a solid electrolyte as an electrolytic substance, instead of an organic electrolyte solution. While the lithium-ion batteries cannot be used under temperature conditions higher than the boiling point of their electrolyte solution (about 80°C), the fully solid-state batteries can be used under temperature conditions higher than 100°C and can enhance the conductivity of lithium ions when the batteries are used under high temperature conditions (e.g., 100°C to 150°C or 100°C to 170°C).

However, in manufacturing of laminated fully solid-state batteries using the above-mentioned multilayer film as a packaging material, the adhesion between layers in a high temperature environment may not be achieved if the packaging material has insufficient heat resistance. This causes a deterioration in lamination strength, leading to a decrease in sealing performance of the package of fully solid-state batteries. As described in PTL 1, for example, the packaging material has a structure in which a substrate layer, a metal foil layer (barrier layer) and a sealant layer are laminated via an adhesive layer or the like. In this case, the adhesion between the substrate layer and the metal foil layer are likely to be deteriorated in a high temperature environment. In addition, epoxy adhesives are known as heat-resistant adhesives, but cured epoxy adhesives tend to be brittle and are likely to be insufficient to provide deep drawing formability required for packaging materials and lamination strength under a room temperature environment.

In view of the above issue, the object of the present disclosure is to provide a power storage device packaging material capable of exhibiting excellent lamination strength in both room temperature environment and high temperature environment and having excellent deep drawing formability, and a power storage device using the power storage device packaging material.

### [Solution to Problem]

In order to achieve the object of the present disclosure, the present disclosure provides a power storage device packaging material (which may hereinafter also be simply referred to as "packaging material") as defined in claim 1. Preferred embodiments of the power storage device packaging material are the subject of claims 2 to 5.

In a cured film (adhesive layer) of an adhesive using a polyfunctional isocyanate compound containing a polyester polyol resin as a base resin and an isocyanurate of isophorone diisocyanate (hereinafter, also referred to as an "IPDI-isocyanurate") as a hardener at a specific ratio, relaxation of molecular chain mixing is unlikely to occur even when exposed to high temperatures because of the bulky molecular structure of the IPDI-isocyanurate. Therefore, adhesion between the layers is not likely to decrease even in a high temperature environment, and sufficient lamination strength between the substrate layer and the barrier layer via the above adhesive layer can be obtained. In addition, the above adhesive layer has toughness higher than that of a cured film of epoxy-based adhesive, and can exhibit excellent deep drawing formability and excellent lamination strength in a room temperature environment. Therefore, according to the power storage device packaging material of the present disclosure having the above configuration, excellent lamination strength in both room temperature environment and high temperature environment can be achieved, and deep drawing formability can be improved. Further, since the IPDI-isocyanurate has an alicyclic structure and does not have an aromatic ring, the adhesive layer using the IPDI-isocyanurate as a hardener has an advantage that it is not likely to cause yellowing (deterioration in appearance) even when exposed to a high temperature environment for a long period of time.

In the above power storage device packaging material, a ratio of a number of isocyanate groups contained in the polyfunctional isocyanate compound to a number of hydroxyl groups contained in the polyester polyol resin may be 2 to 60.

When the ratio (NCO/OH) of the number of isocyanate groups to the number of hydroxyl groups is 2 or more, lamination strength in a high temperature environment can be further improved. The reason is as follows. When the amount of the hardener is large relative to the base resin, the hardeners react with each other to produce by-products such as urea resin and biuret resin. These resins contain active hydrogen groups, which interact with polar groups in each layer, increasing the interfacial adhesion. Accordingly, the heat resistance is considered to be improved. On the other hand, the ratio (NCO/OH) of 60 or less can prevent occurrence of insufficient curing caused by an excessively high ratio of the hardener. Accordingly, lamination strength in a room temperature environment and a high temperature environment can be further improved. Further, an excessively high ratio of the hardener, which causes an excessively high ratio of urea resin or biuret resin in the cured film, may cause the cured film to be brittle and have poor formability. Such a problem can be avoided by setting the ratio (NCO/OH) to 60 or less.

In the above power storage device packaging material, the polyfunctional isocyanate compound further contains an adduct of tolylene diisocyanate (hereinafter, referred to a "TDI-adduct"). The TDI-adduct has intermolecular interaction (π-π stacking) and urethane bonds, and has high cohesive force. Accordingly, the TDI-adduct has relatively good heat resistance, although lower than that of the IPDI-isocyanurate. Further, the TDI-adduct can exhibit adhesion strength in a room temperature environment and deep drawing formability higher than those of the IPDI-isocyanurate. Therefore, by using the IPDI-isocyanurate and the TDI-adduct in combination, excellent lamination strength in both a room temperature environment and a high temperature environment at a high level in a balanced manner can be obtained, and deep drawing formability can be further improved.

In the above power storage device packaging material, a ratio of a number of isocyanate groups derived from the isocyanurate of isophorone diisocyanate to a number of isocyanate groups derived from the adduct of tolylene diisocyanate contained in the polyfunctional isocyanate compound is 0.05 to 20. When the ratio (NCO_{A}/NCO_{B}) of the number of isocyanate groups (NCO_{A}) derived from the IPDI-isocyanurate to the number of isocyanate groups (NCO_{B}) derived from the TDI-adduct is 0.05 or more, a sufficient heat resistance improvement effect of the IPDI-isocyanurate can be achieved, and sufficient lamination strength in a high temperature environment can be obtained. Further, when the ratio (NCO_{A}/NCO_{B}) is 0.05 or more, occurrence of delamination when the packaging material is exposed to a high temperature after the deep drawing can be sufficiently prevented. On the other hand, when the ratio (NCO_{A}/NCO_{B}) is 20 or less, a sufficient adhesion improvement effect of the TDI-adduct in room temperature can be achieved, and lamination strength in a room temperature environment and deep drawing formability can be further improved.

In the above power storage device packaging material, a mass per unit area of the adhesive layer may be 2.0 g/m² to 6.0 g/m². When the mass per unit area is 2.0 g/m² or more, the adhesive layer can have a sufficient thickness, whereby the rigidity of the adhesive layer becomes close to that of the substrate layer and the barrier layer. Accordingly, the deep drawing formability and the lamination strength in both a room temperature environment and a high temperature environment can be further improved. On the other hand, when the mass per unit area is larger than 6.0 g/m², it is difficult to further improve deep drawing formability and lamination strength. Therefore, from the viewpoint of preventing the film thickness and the cost from increasing, the mass per unit area is preferably 6.0 g/m² or less.

In the above power storage device packaging material, an anticorrosion treatment layer may be provided on one or both surfaces of the barrier layer. The anticorrosion treatment layer can prevent corrosion of the barrier layer, and further enhance adhesion between the barrier layer and a layer adjacent thereto. In fully solid-state batteries, a sulfide-based material may be used for the electrolyte. When water infiltrates into the packaging material, a sulfide-based compound reacts with water to generate hydrogen sulfide (H₂S). The H₂S may deteriorate adhesion between the barrier layer and a layer adjacent thereto. However, when the aforementioned power storage device packaging material is used as a packaging material of fully solid-state batteries, the anticorrosion treatment layer provided on a surface of the barrier layer can impart H₂S resistance to the barrier layer, preventing deterioration in adhesion between the barrier layer and a layer adjacent thereto.

**In** the above power storage device packaging material, the substrate layer may be made of a polyamide film or a polyester film. When a polyamide film or a polyester film is used as the substrate layer, the deep drawing formability can be further improved. Further, when a polyethylene terephthalate film is used as the substrate layer, adhesion to the adhesive layer is further improved. As a result, the heat resistance and the deep drawing formability tend to be further improved.

The above power storage device packaging material may be for use with a fully solid-state battery.

Furthermore, the present disclosure provides a power storage device including: a power storage device main body; a current extraction terminal extending from the power storage device main body; and the power storage device packaging material of the above disclosure, the power storage device packaging material sandwiching and holding the current extraction terminal and accommodating the power storage device main body. The above power storage device may be a fully solid-state battery.

In the present disclosure, the sealant layer may contain at least one of a polyolefin-based resin and a polyester-based resin, and may contain a polyester-based resin. When the sealant layer contains a polyolefin-based resin having a high melting point, the obtained packaging material has excellent heat resistance, and when the sealant layer contains a polyester-based resin having a higher melting point, the obtained packaging material has more excellent heat resistance.

The present disclosure may be for use with a fully solid-state battery. Since the packaging material of the present disclosure has excellent heat resistance and sufficient deep drawing formability, it is suitable for use with fully solid-state batteries in which a recess is formed by cold forming, and the battery contents are accommodated in the recess.

### [Advantageous Effects of the Invention]

According to the aspects of the present disclosure, a power storage device packaging material capable of exhibiting excellent lamination strength in both room temperature environment and high temperature environment and having excellent deep drawing formability, and a power storage device using the power storage device packaging material can be provided.

Fig. 1 is a schematic cross-sectional view of a power storage device packaging material according to an embodiment of the present disclosure.
Fig. 2 is a schematic cross-sectional view of a power storage device packaging material according to an embodiment of the present disclosure.
Fig. 3 is a perspective view of a power storage device according to an embodiment of the present disclosure.
Fig. 4 is a schematic cross-sectional view of a power storage device packaging material according to the present disclosure.
Fig. 5 is a set of diagrams illustrating an embossed packaging material obtained using a power storage device packaging material according to the present disclosure, in which (a) is a perspective view of the embossed packaging material and (b) is a vertical cross-sectional view of the embossed packaging material shown in (a) taken along the line b-b.

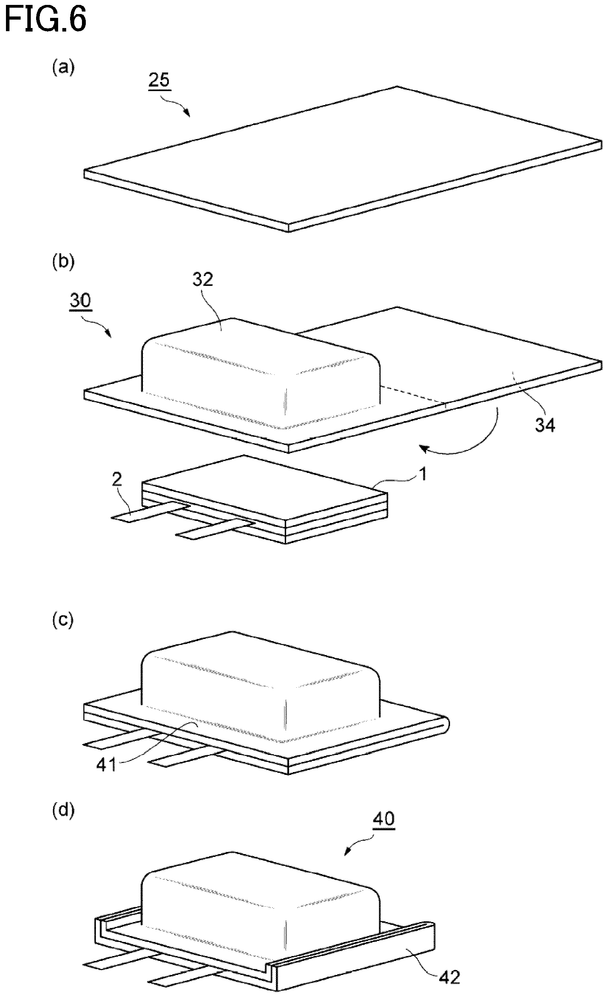

Fig. 6 is a set of perspective views illustrating steps of producing a secondary battery using a power storage device packaging material according to the present disclosure, in which (a) illustrates a state in which the power storage device packaging material is provided, (b) illustrates a state in which the power storage device packaging material that has been embossed and a battery element are provided, (c) illustrates a state in which part of the power storage device packaging material is folded back and the end portion is heat-sealed, and (d) illustrates a state in which both sides of the folded-back portion are turned up.

### [Description of the Embodiments]

With reference to the drawings, preferred embodiments of the present disclosure will be specifically described. Throughout the drawings, the same or corresponding components are denoted by the same reference signs, and repeated description is omitted. Further, dimensional ratios of the drawings are not limited to the ratios shown in the drawings.

### <<First Aspect>>

The following description will be given of a power storage device packaging material, a method of producing the packaging material and a power storage device according to a first aspect of the present disclosure.

### [Power Storage Device Packaging Material]

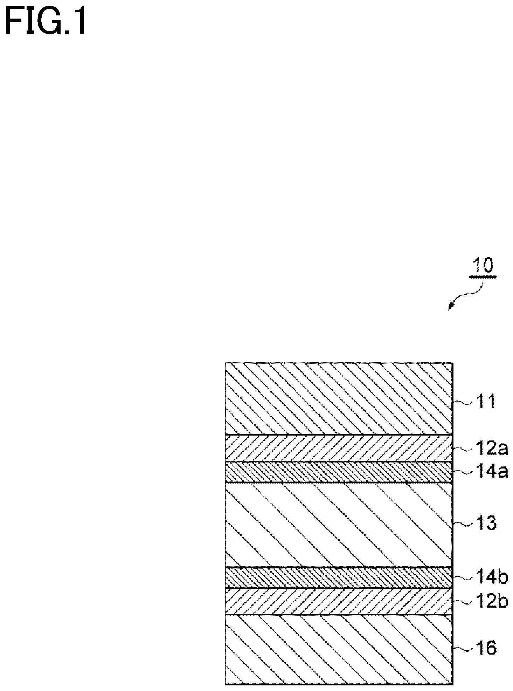

Fig. 1 is a cross-sectional view schematically illustrating an embodiment of a power storage device packaging material of the present disclosure. As shown in Fig. 1, a packaging material (power storage device packaging material) 10 of the present embodiment is a laminate including, in the following order, a substrate layer 11, a first adhesive layer 12a formed on a surface of the substrate layer 11, a barrier layer 13 formed on the first adhesive layer 12a on a side opposite to that facing the substrate layer 11, the barrier layer 13 provided with first and second anticorrosion treatment layers 14a and 14b on respective sides, a second adhesive layer 12b formed on the barrier layer 13 on a side opposite to that facing the first adhesive layer 12a, and a sealant layer 16 formed on the second adhesive layer 12b on a side opposite to that facing the barrier layer 13. The first anticorrosion treatment layer 14a is provided on a surface of the barrier layer 13 facing the substrate layer 11, and the second anticorrosion treatment layer 14b is provided on a surface of the barrier layer 13 facing the sealant layer 16. In the packaging material 10, the substrate layer 11 is the outermost layer and the sealant layer 16 is the innermost layer. In other words, the packaging material 10 is used with the substrate layer 11 being on the outside of the power storage device and the sealant layer 16 being on the inside of the power storage device.

In the packaging material 10 of the present embodiment, at least one of the first adhesive layer 12a and the second adhesive layer 12b is a layer containing a polyurethane-based compound made of a reaction product of at least one polyester polyol resin and at least one polyfunctional isocyanate compound. The polyfunctional isocyanate compound contains an isocyanurate of isophorone diisocyanate (IPDI-isocyanurate), and the content of isocyanate groups derived from the IPDI-isocyanurate in the polyfunctional isocyanate compound is 5 mol% to 100 mol% relative to the total amount of isocyanate groups contained in the polyfunctional isocyanate compound of 100 mol%.

In the following description, each of layers constituting the packaging material 10 will be specifically described.

### <Substrate Layer 11>

The substrate layer 11 imparts heat resistance to the packaging material in the sealing step during production of the power storage device, and prevents pinholes from occurring during forming processing or distribution. Particularly in the case of a packaging material for a large power storage device, the substrate layer 11 can also impart scratch resistance, chemical resistance, insulating properties, and the like.

The substrate layer 11 is preferably formed of a resin film made of a resin having insulating properties. Examples of the resin film include stretched or unstretched films such as polyester films, polyamide films, polyimide films, and polypropylene films. The substrate layer 11 may be a monolayer film made of one of these resin films, or a laminated film made of two or more of these resin films.

The substrate layer 11 is preferably made of, among the above resin films, a polyester film or a polyamide film, and more preferably a polyester film from the perspective of having excellent formability. These films are preferably biaxially stretched. A polyester resin constituting the polyester film may be, for example, polyethylene terephthalate (PET). A polyamide resin constituting the polyamide film may be, for example, Nylon-6, Nylon-6,6, a copolymer of Nylon-6 and Nylon-6,6, Nylon-6,10, polymetaxylylene adipamide (MXD6), Nylon-11, Nylon-12, or the like. Among the polyamide films, nylon 6 (ONy) is preferred from the perspective of having good heat resistance, piercing strength and impact strength.

The stretching method used for the biaxially stretched film may be, for example, sequential biaxial stretching, tubular biaxial stretching, simultaneous biaxial stretching, or the like. From the perspective of obtaining better deep drawing formability, the biaxially stretched film is preferably stretched using a tubular biaxial stretching method.

Preferably, the substrate layer 11 has a peak melting temperature higher than that of the sealant layer 16. When the sealant layer 16 has a multilayer structure, the peak melting temperature of the sealant layer 16 refers to that of the layer having a maximum peak melting temperature. The peak melting temperature of the substrate layer 11 is preferably 290°C or higher, and more preferably 290°C to 350°C. The resin film that can be used as the substrate layer 11 and has a peak melting temperature within the above range may be a nylon film, PET film, polyamide film, polyimide film, polyphenylene sulfide film (PPS film), or the like. The substrate layer 11 may be a commercially available film, or may be a coating film (obtained by applying and drying a coating liquid). The substrate layer 11 may have a single layer structure or a multilayer structure, or may be formed by applying a thermosetting resin. Further, the substrate layer 11 may contain various additives (e.g., a flame retardant, slip agent, anti-blocking agent, antioxidant, photostabilizer, and tackifier).

When the peak melting temperature of the substrate layer 11 is expressed as T₁₁ and that of the sealant layer 16 is expressed as T₁₆, the difference between them (T₁₁-T₁₆) is preferably 20°C or more. When the temperature difference is 20°C or more, deterioration in appearance of the packaging material 10 due to heat-sealing can be more sufficiently prevented.

The substrate layer 11 preferably has a thickness of 5 µm to 50 µm, more preferably 6 µm to 40 µm, still more preferably 10 µm to 30 µm, and particularly preferably 12 µm to 30 µm. When the thickness of the substrate layer 11 is 5 µm or more, there is a tendency to improve pinhole resistance and insulation properties of the power storage device packaging material 10. When the substrate layer 11 has a thickness of greater than 50 µm, the total thickness of the power storage device packaging material 10 increases, and the electrical capacity of the battery may have to be reduced, which is not desirable.

### <First Adhesive Layer 12a>

The first adhesive layer 12a bonds the substrate layer 11 and the barrier layer 13. In the packaging material 10 of the present embodiment, the first adhesive layer 12a (hereinafter, also referred to as a "specific adhesive layer") is a layer containing a polyurethane-based compound made of a reaction product of at least one polyester polyol resin and at least one polyfunctional isocyanate compound, in which the polyfunctional isocyanate compound contains IPDI-isocyanurate, and the content of isocyanate groups derived from the IPDI-isocyanurate in the polyfunctional isocyanate compound is 5 mol% to 100 mol% relative to the total amount of isocyanate groups contained in the polyfunctional isocyanate compound of 100 mol%.

In the specific adhesive layer, the content of isocyanate groups derived from the IPDI-isocyanurate in the polyfunctional isocyanate compound is 5 mol% to 100 mol%, preferably 25 mol% to 95 mol%, and more preferably 50 mol% to 75 mol% relative to the total amount of isocyanate groups contained in the polyfunctional isocyanate compound of 100 mol%. When the content is 5 mol% or more, lamination strength in a high temperature environment can be obtained, and occurrence of delamination when the packaging material is exposed to a high temperature after the deep drawing can be prevented. On the other hand, the above content may be 100 mol%, or may be less than 100 mol% when a polyfunctional isocyanate compound other than the IPDI-isocyanurate is used in combination with the IPDI-isocyanurate. When the content is 95 mol% or less, lamination strength in a room temperature environment and deep drawing formability tend to be further improved due to the effect of combined use of other polyfunctional isocyanate compounds.

In the specific adhesive layer, the polyfunctional isocyanate compound includes, in addition to the IPDI-isocyanurate an adduct of tolylene diisocyanate (TDI-adduct). When such a polyfunctional isocyanate compound is used together with the IPDI-isocyanurate, lamination strength in a room temperature environment and deep drawing formability can be further improved.

In the polyfunctional isocyanate compound containing a TDI-adduct, a ratio (NCO_{A}/NCO_{B}) of the number of isocyanate groups (NCO_{A}) derived from the IPDI-isocyanurate to the number of isocyanate groups (NCO_{B}) derived from the TDI-adduct is 0.05 to 20. From the viewpoint of heat resistance, the ratio (NCO_{A}/NCO_{B}) may be 0.3 to 6, preferably 2 to 4, and more preferably 3. Further, the ratio (NCO_{A}/NCO_{B}) may also be 7 to 20. When the ratio is 0.05 or more, sufficient lamination strength in a high temperature environment can be obtained, and occurrence of delamination when the packaging material is exposed to a high temperature after the deep drawing can be sufficiently prevented. When the ratio is 20 or less, lamination strength in a room temperature environment and deep drawing formability can be further improved.

In the specific adhesive layer, a ratio (NCO/OH) of the number of isocyanate groups contained in the polyfunctional isocyanate compound to the number of hydroxyl groups contained in the polyester polyol resin may be 2 to 60, preferably 5 to 50, and more preferably 10 to 30. When the ratio is 2 or more, lamination strength in a high temperature environment can be further improved. When the ratio is 60 or less, lamination strength in a room temperature environment and a high temperature environment can be further improved.

The thickness of the first adhesive layer 12a is not specifically limited, but may be, for example, preferably 1 µm to 10 µm, and more preferably 3 µm to 7 µm from the perspective of obtaining desired adhesive strength, conformability, processability, and the like.

When the first adhesive layer 12a is the specific adhesive layer, a mass per unit area of the first adhesive layer 12a may be 2.0 g/m² to 6.0 g/m², preferably 2.5 g/m² to 5.0 g/m², and more preferably 3.0 g/m² to 4.0 g/m² from the perspective of ensuring further improved lamination strength in a room temperature environment and a high temperature environment, and obtaining further improved deep drawing formability.

### <Barrier Layer 13>

The barrier layer 13 has water vapor barrier properties to prevent moisture from infiltrating into the power storage device. Further, the barrier layer 13 has ductility and malleability for deep drawing. The barrier layer 13 can be made of, for example, various metal foils such as an aluminum, stainless steel and copper, or a metal vapor deposition film, an inorganic oxide vapor deposition film, a carbon-containing inorganic oxide vapor deposition film, or a film having these vapor deposition films. Examples of the film having a vapor deposition film include an aluminum vapor deposition film and an inorganic oxide vapor deposition film. These can be used singly or in combination of two or more. The barrier layer 13 is preferably made of a metal foil, and more preferably made of an aluminum foil from the viewpoint of the weight (specific gravity), moisture resistance, processability, and cost.

The aluminum foil may be a soft aluminum foil, particularly one subjected to an annealing treatment from the perspective of imparting desired ductility and malleability during forming. It is more preferable to use an iron-containing aluminum foil for the purpose of further imparting pinhole resistance, ductility and malleability during forming. The iron content in the aluminum foil is preferably 0.1 mass% to 9.0 mass%, and more preferably 0.5 mass% to 2.0 mass% relative to 100 mass% of the aluminum foil. The iron content of 0.1 mass% or more can improve pinhole resistance, ductility and malleability of a packaging material 10. The iron content of 9.0 mass% or less can improve flexibility of a packaging material 10. Although an untreated aluminum foil may also be used as the aluminum foil, an aluminum foil subjected to a degreasing treatment is preferably used from the perspective of imparting electrolyte resistance. When the aluminum foil is degreased, only one surface of the aluminum foil may be degreased, or both surfaces may be degreased.

The thickness of the barrier layer 13 is not specifically limited, but is preferably 9 µm to 200 µm, and more preferably 15 µm to 100 µm from the perspective of barrier properties, pinhole resistance and processability. The thickness less than 15 µm may decrease formability. Further, the thickness greater than 100 µm tends to decrease the weight energy density of the battery, leading to a high cost.

### <First and Second Anticorrosion Treatment Layers 14a, 14b>

The first and second anticorrosion treatment layers 14a and 14b are disposed on respective surfaces of the barrier layer 13 to prevent corrosion of the metal foil (metal foil layer) or the like constituting the barrier layer 13. The first anticorrosion treatment layer 14a enhances adhesion between the barrier layer 13 and the first adhesive layer 12a. Further, the second anticorrosion treatment layer 14b enhances adhesion between the barrier layer 13 and the second adhesive layer 12b. The first and second anticorrosion treatment layers 14a and 14b may have the same configuration or different configurations. The first and second anticorrosion treatment layers 14a and 14b (hereinafter, also simply referred to as "anticorrosion treatment layers 14a and 14b") may be formed by, for example, degreasing treatment, hydrothermal modification treatment, anodic oxidation treatment, chemical conversion treatment, or a combination of these treatments.

The degreasing treatment may be acid degreasing or alkaline degreasing. The acid degreasing may be a method using an inorganic acid, such as sulfuric acid, nitric acid, hydrochloric acid or hydrofluoric acid, alone or in combination. The acid degreasing may include use of an acid degreasing agent obtained by dissolving a fluorine-containing compound such as monosodium ammonium difluoride with the aforementioned inorganic acid. Specifically when an aluminum foil is used as the barrier layer 13, use of this acid degreasing agent is effective in terms of corrosion resistance, for its contribution to forming a fluoride of aluminum in a passive state, in addition to obtaining the effect of degreasing aluminum. The alkaline degreasing may be a method using sodium hydroxide or the like.

The hydrothermal modification treatment may be, for example, a boehmite treatment in which an aluminum foil is immersed in boiling water to which triethanolamine has been added.

The anodic oxidation treatment may be, for example, an alumite treatment.

The chemical conversion treatment may be an immersion type or a coating type. Examples of the immersion type chemical conversion treatment include chromate treatment, zirconium treatment, titanium treatment, vanadium treatment, molybdenum treatment, calcium phosphate treatment, strontium hydroxide treatment, cerium treatment, ruthenium treatment, and various chemical conversion treatments of mixed phases thereof. On the other hand, examples of the coating type chemical conversion treatment include a method of applying a coating agent having a corrosion prevention performance to the barrier layer 13.

Of these anticorrosion treatments, when any of the hydrothermal modification treatment, anodic oxidation treatment, and chemical conversion treatment is used to form at least part of the anticorrosion treatment layer, degreasing treatment is preferably performed in advance. Further, when a degreased metal foil such as an annealed metal foil is used as the barrier layer 13, it is not necessary to perform degreasing treatment again in forming the anticorrosion treatment layers 14a and 14b.

The coating agent used for the coating type chemical conversion treatment preferably contains trivalent chromium. Further, the coating agent may contain at least one polymer selected from the group consisting of a cationic polymer and an anionic polymer described later.

Of the treatments mentioned above, the hydrothermal modification treatment and the anodic oxidation treatment, in particular, dissolve a surface of an aluminum foil with a treating agent to form an aluminum compound (such as boehmite or alumite) having good corrosion resistance. These treatments are included in the definition of the chemical conversion treatment since a co-continuous structure is formed from the barrier layer 13 made of an aluminum foil to the anticorrosion treatment layers 14a and 14b. On the other hand, the anticorrosion treatment layers 14a and 14b can also be formed only by a pure coating method, which is not included in the definition of the chemical conversion treatment, as will be described later. For example, this coating method may use a rare-earth oxide sol such as cerium oxide with a mean particle size of 100 nm or less as a material exhibiting an anticorrosion effect (inhibitor effect) for aluminum and preferable in terms of environmental aspects. Use of this method makes it possible to impart an anticorrosion effect to a metal foil such as an aluminum foil even when using an ordinary coating method.

Examples of the rare-earth oxide sol include sols using various solvents such as an aqueous solvent, an alcohol-based solvent, a hydrocarbon-based solvent, a ketone-based solvent, an ester-based solvent, an ether-based solvent, and the like. Of these sols, an aqueous sol is preferred.

To stabilize dispersion, the rare-earth oxide sol may contain, as a dispersion stabilizer, an inorganic acid such as nitric acid, hydrochloric acid, phosphoric acid, or the like or a salt thereof, or an organic acid such as acetic acid, malic acid, ascorbic acid, lactic acid, or the like. Of these dispersion stabilizers, phosphoric acid, in particular, is expected to impart the packaging material 10 with features of (1) stabilizing dispersion of the sol, (2) improving adhesion to the barrier layer 13 making use of an aluminum chelate ability of phosphoric acid, and (3) improving cohesive force of the anticorrosion treatment layers 14a and 14b (oxide layers) by readily inducing dehydration condensation of phosphoric acid even at low temperature, and the like.

The phosphoric acid or a salt thereof may be orthophosphoric acid, pyrophosphoric acid, metaphosphoric acid, or an alkali metal salt or an ammonium salt thereof. Of these phosphoric acids or salts thereof, a condensed phosphoric acid such as trimetaphosphoric acid, tetrametaphosphoric acid, hexametaphosphoric acid or ultrametaphosphoric acid, or an alkali metal salt thereof or an ammonium salt thereof is preferred for functional development in the packaging material 10. Further, considering the dry film forming properties (drying capacity and heat quantity) in formation of the anticorrosion treatment layers 14a and 14b made of a rare-earth oxide by various coating methods using the above rare-earth oxide sol, a sodium salt is more preferred from the perspective of exhibiting good dehydrating condensation at low temperature. The phosphate is preferably a water-soluble salt.

The content of the phosphoric acid (or a salt thereof) in the rare-earth oxide is preferably 1 part by mass to 100 parts by mass relative to 100 parts by mass of the rare-earth oxide. When the above content of the phosphoric acid or a salt thereof is 1 part by mass or more relative to 100 parts by mass of the rare-earth oxide, the rare-earth oxide sol becomes more stable and the function of the packaging material 10 becomes much better. The above content is more preferably 5 parts by mass or more relative to 100 parts by mass of the rare-earth oxide. Further, when the above content is 100 parts by mass or less relative to 100 parts by mass of the rare-earth oxide, the function of the rare-earth oxide sol is enhanced. The above content is preferably 50 parts by mass or less, and more preferably 20 parts by mass or less, relative to 100 parts by mass of the rare-earth oxide.

Since the anticorrosion treatment layers 14a and 14b formed of the rare-earth oxide sol are aggregates of inorganic particles, the cohesive force of these layers may be lowered even after being dry-cured. Therefore, the anticorrosion treatment layers 14a and 14b in this case are preferably compounded with an anionic polymer or a cationic polymer described below in order to supplement the cohesive force.

The anionic polymer may be a polymer having a carboxy group. For example, poly(meth)acrylic acid (or a salt thereof), or a copolymer containing poly(meth)acrylic acid as a main component may be used. The copolymerization component of the copolymer includes an alkyl (meth)acrylate monomer (having a methyl group, an ethyl group, an n-propyl group, an i-propyl group, an n-butyl group, an i-butyl group, a t-butyl group, a 2-ethylhexyl group, a cyclohexyl group, etc. as an alkyl group); an amide group-containing monomer such as (meth)acrylamide, N-alkyl (meth)acrylamide, or N,N-dialkyl (meth)acrylamide (having a methyl group, an ethyl group, an n-propyl group, an i-propyl group, an n-butyl group, an i-butyl group, a t-butyl group, a 2-ethylhexyl group, a cyclohexyl group, etc. as an alkyl group), N-alkoxy (meth)acrylamide, or N,N-dialkoxy (meth)acrylamide (having a methoxy group, an ethoxy group, a butoxy group, an isobutoxy group, etc. as an alkoxy group), N-methylol (meth)acrylamide, or N-phenyl (meth)acrylamide; a hydroxyl group-containing monomer such as 2-hydroxyethyl (meth)acrylate, or 2-hydroxypropyl (meth)acrylate; a glycidyl group-containing monomer such as glycidyl (meth)acrylate, or allyl glycidyl ether; a silane-containing monomer such as (meth)acryloxypropyltrimethoxysilane or (meth)acryloxypropyltriethoxysilane; or an isocyanate such as (meth)acryloxypropyl isocyanate.

These anionic polymers improve the stability of the anticorrosion treatment layers 14a and 14b (oxide layers) obtained using the rare-earth element oxide sol. The improvement is achieved by the effect of protecting a hard and brittle oxide layer with an acrylic resin component, and the effect of capturing ion contamination (particularly sodium ions) derived from the phosphate contained in the rare-earth oxide sol (cation catcher). That is, if the anticorrosion treatment layers 14a and 14b obtained using the rare-earth oxide sol contain alkali metal ions such as sodium ions or alkaline earth metal ions in particular, the anticorrosion treatment layers 14a and 14b are likely to be deteriorated starting from the ion-containing site. Therefore, the sodium ion or the like contained in the rare-earth oxide sol is fixed with the anionic polymer to improve the durability of the anticorrosion treatment layers 14a and 14b.

The anticorrosion treatment layers 14a and 14b obtained by combining the anionic polymer and the rare-earth oxide sol have anticorrosion performance equivalent to that of the anticorrosion treatment layers 14a and 14b formed by applying chromate treatment to an aluminum foil. The anionic polymer preferably has a structure in which a polyanionic polymer which is essentially water-soluble is crosslinked. The crosslinking agent used for forming this structure may be a compound having, for example, an isocyanate group, a glycidyl group, a carboxy group or an oxazoline group.

Examples of the compound having an isocyanate group include diisocyanates such as tolylene diisocyanate, xylylene diisocyanate or a hydrogenated product thereof, hexamethylene diisocyanate, 4,4'-diphenylmethane diisocyanate or a hydrogenated product thereof, and isophorone diisocyanate; polyisiocyanates such as an adduct obtained by reacting these isocyanates with a polyhydric alcohol such as trimethylolpropane, a biuret obtained by reacting the isocyanates with water, or an isocyanurate as a trimer; and a blocked polyisocyanate obtained by blocking these polyisocyanates with an alcohol, a lactam, an oxime, or the like.

Examples of the compound having a glycidyl group include epoxy compounds obtained by permitting epichlorohydrin to act on a glycol such as ethylene glycol, diethylene glycol, triethylene glycol, polyethylene glycol, propylene glycol, dipropylene glycol, tripropylene glycol, polypropylene glycol, 14a,14b-butanediol, 1,6-hexanediol or neopentyl glycol; epoxy compounds obtained by permitting epichlorohydrin to act on a polyhydric alcohol such as glycerin, polyglycerin, trimethylolpropane, pentaerythritol or sorbitol; and epoxy compounds obtained by permitting epichlorohydrin to act on a dicarboxylic acid such as phthalic acid, terephthalic acid, oxalic acid or adipic acid.

Examples of the compound having a carboxy group includes various aliphatic or aromatic dicarboxylic acids and the like. Also, poly(meth)acrylic acid or an alkali (earth) metal salt of poly(meth)acrylic acid may be used.

Examples of the compound having an oxazoline group include low molecular weight compounds having two or more oxazoline units, or when using a polymerizable monomer such as isopropenyloxazoline, compounds obtained by copolymerizing with acrylic monomers such as (meth)acrylic acid, (meth)acrylic acid alkyl ester and hydroxyalkyl (meth)acrylate.

Further, the crosslinking point may be a siloxane bond by reacting an anionic polymer with a silane coupling agent, more specifically, by selectively reacting a carboxy group of an anionic polymer with a functional group of a silane coupling agent. In this case, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropyltrimethoxysilane, γ-aminopropyltriethoxysilane, N-β(aminoethyl)-γ-aminopropyltrimethoxysilane, γ-isocyanatopropyltriethoxysilane, or the like may be used. Of these materials, an epoxy silane, aminosilane or isocyanate silane is preferable in terms of reactivity with an anionic polymer or a copolymer thereof in particular.

The ratio of these crosslinking agents to the anionic polymer is preferably 1 part by mass to 50 parts by mass, and more preferably 10 parts by mass to 20 parts by mass, relative to 100 parts by mass of the anionic polymer. When the ratio of the crosslinking agent is 1 part by mass or more relative to 100 parts by mass of the anionic polymer, a sufficiently crosslinked structure is likely to be formed. When the ratio of the crosslinking agent is 50 parts by mass or less relative to 100 parts by mass of the anionic polymer, the pot life of the coating solution improves.

The method used for crosslinking the anionic polymer may be a method of forming an ionic crosslinkage using titanium, zirconium compound or the like, and is not limited to the use of the crosslinking agents mentioned above.

The cationic polymer may be a polymer having an amine, including polyethyleneimine, an ionic polymer complex composed of a polymer having polyethyleneimine and a carboxylic acid, a primary amine graft acrylic resin obtained by grafting a primary amine to an acrylic backbone, polyallylamine or derivatives thereof, and aminophenol. Examples of the polyallylamine include homopolymers or copolymers of allylamine, allylamine amide sulfate, diallylamine, dimethylallylamine, and the like. These amines may be free amines or may be ones stabilized with acetic acid or hydrochloric acid. Maleic acid, sulfur dioxide or the like may be used as a copolymer component. Furthermore, a primary amine may be used after being partially methoxylated to impart crosslinking properties thereto, or aminophenol may also be used. **In** particular, allylamine or derivatives thereof are preferable.

The cationic polymer is preferably used in combination with a crosslinking agent having a functional group, such as a carboxy group or a glycidyl group, capable of reacting with an amine/imine. The crosslinking agent to be used in combination with the cationic polymer may be polymers having carboxylic acid that forms an ionic polymer complex with polyethyleneimine. Examples of such a crosslinking agent include polycarboxylic acid (salt) such as polyacrylic acid or ionic salts thereof, copolymers having a comonomer introduced thereto, polysaccharides having a carboxy group such as carboxymethyl cellulose or ionic salts thereof, and the like.

The cationic polymer is a more preferable material from the perspective of improving adhesiveness. Since the cationic polymer is water-soluble similarly to the anionic polymer mentioned above, it is more preferable to impart water resistance by permitting it to form a crosslinked structure. The crosslinking agent that can be used for forming a crosslinked structure in the cationic polymer may include ones mentioned in the section on the anionic polymer. When a rare-earth oxide sol is used as the anticorrosion treatment layers 14a and 14b, a cationic polymer may be used as a protective layer, instead of using the anionic polymer mentioned above.

The anticorrosion treatment layer is a chemical conversion treatment layer obtained through chemical conversion treatment represented by a chromate treatment, and can form a gradient structure on the aluminum foil in which the chemical conversion treatment layer is **formed** on the aluminum foil by treating the aluminum foil using, in particular, a chemical conversion treating agent containing hydrofluoric acid, hydrochloric acid, nitric acid, sulfuric acid, or a salt thereof, followed by permitting it to react with a chromium- or non-chromium-based compound. However, the chemical conversion treatment, which uses an acid as a chemical conversion treating agent, causes deterioration of the working environment and corrosion of the coating device. **In** this regard, the coating-type anticorrosion treatment layers 14a and 14b mentioned above do not need to form a gradient structure on the barrier layer 13 of an aluminum foil, unlike the anticorrosion treatment layer obtained through the chemical conversion treatment represented by a chromate treatment. Therefore, the properties of the coating agent are not restricted in terms of acidity, alkalinity, neutrality and the like, and a good working environment can be achieved. The coating-type anticorrosion treatment layers 14a and 14b are preferred since chromate treatment using a chromium compound requires alternatives in terms of environmental health.

From the above description, coating-type anticorrosion treatments as mentioned above can be combined as follows, for example: (1) rare-earth oxide sol alone, (2) anionic polymer alone, (3) cationic polymer alone, (4) rare-earth oxide sol + anionic polymer (laminated composite), (5) rare-earth oxide sol + cationic polymer (laminated composite), (6) rare-earth oxide sol + anionic polymer (laminated composite) / cationic polymer (multilayered), (7) rare-earth oxide sol + cationic polymer (laminated composite) / anionic polymer (multilayered). Of these combinations, (1) and (4) through (7) are preferred, and (4) through (7) are more preferred. However, the present embodiment is not limited to the above combinations. For example, an anticorrosion treatment may be selected as follows. Specifically, the cationic polymer is a highly preferable material in terms of having good adhesion to a modified polyolefin resin, as will be described in the section of adhesive resin layer. Therefore, when the adhesive resin layer is formed of a modified polyolefin resin, it is possible to design it that the cationic polymer is provided on the surface contacting the adhesive resin layer (e.g., configurations (5) and (6)).

The anticorrosion treatment layers 14a and 14b are not limited to the layer mentioned above. For example, the anticorrosion treatment layers may be formed using a treating agent prepared by blending a phosphoric acid and a chromium compound with a resin binder (such as aminophenol) as in a coating-type chromate based on known art. When this treating agent is used, the resultant layer will have both the corrosion-preventing function and adhesion. Although it is necessary to consider stability of a coating solution, a coating agent may be prepared in advance by integrating a rare-earth oxide sol with a polycationic polymer or a polyanionic polymer, and using this coating agent, the anticorrosion treatment layers may be formed being imparted with both the corrosion-preventing function and adhesion.

Regardless of having a multilayer structure or a monolayer structure, the anticorrosion treatment layers 14a and 14b preferably have mass per unit area of 0.005 g/m² to 0.200 g/m², and more preferably 0.010 g/m² to 0.100 g/m². When the mass per unit area is 0.005 g/m² or more, a corrosion-preventing function can be readily imparted to the barrier layer 13. Even if the mass per unit area exceeds 0.200 g/m², there is little change in the corrosion-preventing function. If a rare-earth oxide sol is used and if the coating film is thick, heat-curing during drying may be insufficient, and may decrease the cohesive force. The thickness of the anticorrosion treatment layers 14a and 14b can be calculated from their specific gravity.

From the perspective of enhancing adhesion between the sealant layer and the barrier layer, the anticorrosion treatment layers 14a and 14b may contain, for example, cerium oxide, 1 part by mass to 100 parts by mass of phosphoric acid or phosphate relative to 100 parts by mass of the cerium oxide, and a cationic polymer, or may be formed by applying a chemical conversion treatment to the barrier layer 13, or may contain a cationic polymer and be formed by applying a chemical conversion treatment to the barrier layer 13.

### <Second Adhesive Layer 12b>

The second adhesive layer 12b bonds the barrier layer 13, on which the second anticorrosion treatment layer 14b is formed, to the sealant layer 16. The second adhesive layer 12b may be a general purpose adhesive for bonding a barrier layer to a sealant layer. Specifically, examples of the material used for forming the second adhesive layer 12b include a polyurethane resin prepared by reacting a bifunctional or higher functional isocyanate compound with a main resin such as a polyester polyol, polyether polyol, acrylic polyol, carbonate polyol, or the like.

These various polyols can be used singly or in combination of two or more, according to the functions and performance sought in the packaging material.

Moreover, other various additives and stabilizers may be added to the polyurethane resin mentioned above depending on the performance required of the adhesive.

In the packaging material 10 of the present embodiment, the second adhesive layer 12b may be the specific adhesive layer described above.

The thickness of the second adhesive layer 12b is not particularly limited, but from the perspective of obtaining a desired adhesive strength, processability and the like, the thickness is preferably 1 µm to 10 µm, and more preferably 3 µm to 7 µm.

When the second adhesive layer 12b is the specific adhesive layer, a mass per unit area of the second adhesive layer 12b may be 2.0 g/m² to 6.0 g/m², preferably 2.5 g/m² to 5.0 g/m², and more preferably 3.5 g/m² to 4.5 g/m² from the perspective of ensuring further improved lamination strength in a room temperature environment and a high temperature environment, and obtaining further improved deep drawing formability.

### <Sealant Layer 16>

The sealant layer 16 imparts sealing properties to the packaging material 10 due to heat-sealing. The sealant layer 16 may be a resin film made of a polyolefin-based resin or a polyester-based resin. These resins (hereinafter, also referred to as "base resins") constituting the sealant layer 16 may be used singly or in combination of two or more.

Examples of the polyolefin-based resin include: low density, medium density or high density polyethylenes; ethylene-α olefin copolymers; polypropylenes; block or random copolymers containing propylene as a copolymerization component; and propylene-α olefin copolymers.

Examples of the polyester-based resin include polyethylene terephthalate (PET) resin, polybutylene terephthalate (PBT) resin, polyethylene naphthalate (PEN) resin, polybutylene naphthalate (PBN) resin, polytrimethylene terephthalate (PTT) resin, and the like.

The sealant layer 16 may contain a polyolefin-based elastomer. The polyolefin-based elastomer may or may not have miscibility with the base resin described above, or may contain both a miscible polyolefin-based elastomer having miscibility and an immiscible polyolefin-based elastomer having no miscibility. Having miscibility (miscible system) means that the polyolefin-based elastomer is dispersed with a dispersed phase size of 1 nm or more and less than 500 nm in the base resin. Having no miscibility (immiscible system) means that the polyolefin-based elastomer is dispersed with a dispersed phase size of 500 nm or more and less than 20 µm in the base resin.

When the resin is a polypropylene-based resin, the miscible polyolefin-based elastomer may be, for example, propylene-butene-1 random copolymer, and the immiscible polyolefin-based elastomer may be, for example, ethylene-butene-1 random copolymer. The polyolefin-based elastomers can be used singly or in combination of two or more.

Further, the sealant layer 16 may contain additive components such as a slip agent, an anti-blocking agent, an antioxidant, a photostabilizer, and a flame retardant. The content of these additive components is preferably 5 parts by mass or less when the total mass of the sealant layer 16 is 100 parts by mass.

The thickness of the sealant layer 16 is not specifically limited, but may be preferably in the range of 5 to 100 µm, more preferably in the range of 10 to 100 µm, and still more preferably in the range of 20 to 80 µm from the perspective of reducing the film thickness and enhancing the heat seal strength in a high temperature environment.

The sealant layer 16 may be either a single-layer film or a multi-layer film, and may be suitably selected according to the required function.

Although the preferred embodiments of the power storage device packaging material of the present embodiment have been specifically described above, the present disclosure is not limited to the specific embodiments and can be modified or changed in various ways within the spirit of the present disclosure recited in the claims.

For example, Fig. 1 illustrates an example in which the anticorrosion treatment layers 14a and 14b are disposed on respective sides of the barrier layer 13. However, only one of the anticorrosion treatment layers 14a and 14b may be provided, or the anticorrosion treatment layer may not be provided.

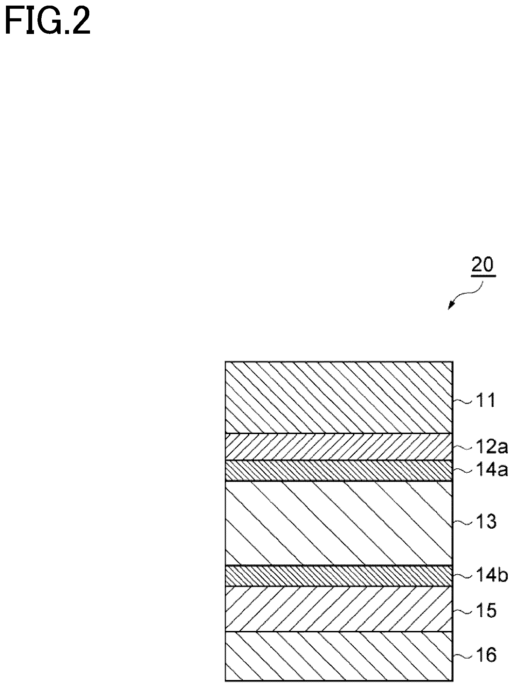

Fig. 1 illustrates an example in which the barrier layer 13 and the sealant layer 16 are laminated using the second adhesive layer 12b. However, the barrier layer 13 and the sealant layer 16 may also be laminated using an adhesive resin layer 15, as in a power storage device packaging material 20 shown in Fig. 2. Further, in the power storage device packaging material 20 shown in Fig. 2, the second adhesive layer 12b may also be provided between the barrier layer 13 and the adhesive resin layer 15.

### <Adhesive Resin Layer 15>

The adhesive resin layer 15 is substantially composed of an adhesive resin composition as the main component and additive components, if necessary. The adhesive resin composition is not particularly limited, but preferably contains a modified polyolefin resin.

The modified polyolefin resin is preferably a polyolefin resin graft-modified with an unsaturated carboxylic acid derivative derived from any of an unsaturated carboxylic acid, acid anhydride thereof and ester thereof.

Examples of the polyolefin resin include low density, medium density and high density polyethylenes, ethylene-α olefin copolymers, homopolypropylenes, blocked polypropylenes, random polypropylenes, and propylene-α olefin copolymers.

The modified polyolefin resin is preferably a polyolefin resin modified with maleic anhydride. For example, "ADMER" manufactured by Mitsui Chemicals, Inc., "MODIC" manufactured by Mitsubishi Chemical Corporation, and the like are suitable for the modified polyolefin resin. Such a modified polyolefin resin excels at reactivity with various metals and polymers having various functional groups, and thus can impart adhesion to the adhesive resin layer 15 making use of the reactivity and can accordingly improve electrolyte resistance. Further, the adhesive resin layer 15 may contain, if necessary, various miscible and immiscible elastomers and various additives such as flame retardants, slip agents, anti-blocking agents, antioxidants, photostabilizers and tackifiers.

The thickness of the adhesive resin layer 15 is not specifically limited, but preferably equal to or less than that of the sealant layer 16 from the perspective of stress relaxation and moisture/electrolyte permeation.

Further, the total thickness of the adhesive resin layer 15 and the sealant layer 16 in the power storage device packaging material 20 is preferably in the range of 5 µm to 100 µm, and more preferably 20 µm to 80 µm from the perspective of reducing the film thickness and enhancing the heat seal strength in a high temperature environment.

### [Method of Producing Packaging Material]

Next, an example of a method of producing the packaging material 10 shown in Fig. 1 will be described. It should be noted that the method of producing the packaging material 10 should not be limited to the methods described below.

The method of producing the packaging material 10 of the present embodiment includes a step of laminating the anticorrosion treatment layers 14a and 14b on respective sides of the barrier layer 13, a step of bonding the substrate layer 11 and the barrier layer 13 using the first adhesive layer 12a, a step of preparing a laminate by further laminating the sealant layer 16 via the second adhesive layer 12b, and, if necessary, a step of aging the resultant laminate.

### (Step of Laminating Anticorrosion Treatment Layers 14a and 14b on Barrier Layer 13)

In the present step, the anticorrosion treatment layers 14a and 14b are formed on the barrier layer 13. As described above, the method may include applying a degreasing treatment, hydrothermal modification treatment, anodic oxidation treatment, or chemical conversion treatment to the barrier layer 13, or applying a coating agent having a corrosion prevention performance to the barrier layer 13.

If the anticorrosion treatment layers 14a and 14b are multilayers, for example, a coating liquid (coating agent) that serves as a lower layer-side (barrier layer 13-side) anticorrosion treatment layer may be applied to the barrier layer 13, followed by baking to form a first layer, and then, a coating liquid (coating agent) that serves as an upper layer-side anticorrosion treatment layer may be applied to the first layer, followed by baking to form a second layer.

The degreasing treatment may be performed by spraying or immersion. The hydrothermal conversion treatment and the anodic oxidation treatment may be performed by immersion. The chemical conversion treatment may be selected from among immersion, spraying and coating depending on the type of chemical conversion treatment.

Various methods such as gravure coating, reverse coating, roll coating and bar coating may be used as the method of applying the coating agent having corrosion prevention performance.

As described above, the various treatments may be applied to either side or both sides of the metal foil. In the case of a single-side treatment, the treatment is preferably applied to the surface on which the sealant layer 16 is to be laminated. If needed, the treatment mentioned above may also be applied to the surface of the substrate layer 11.

The amounts of the coating agents for forming the first and second layers are preferably 0.005 g/m² to 0.200 g/m², and more preferably 0.010 g/m² to 0.100 g/m².

If necessary, dry curing may be carried out within a base material temperature range of 60°C to 300°C depending on the drying conditions of the anticorrosion treatment layers 14a and 14b used.

### (Step of Bonding Substrate Layer 11 and Barrier Layer 13)

In the present step, the barrier layer 13 provided with the anticorrosion treatment layers 14a and 14b on respective sides is bonded to the substrate layer 11 via the first adhesive layer 12a. These layers are bonded to each other using the material constituting the first adhesive layer 12a described above by a bonding method such as dry lamination, non-solvent lamination or wet lamination. The dry coating weight of the first adhesive layer 12a is in the range of 1 g/m² to 10 g/m², and more preferably 2 g/m² to 6 g/m².

### (Step of Laminating Second Adhesive Layer 12b and Sealant Layer 16)

In the present step, the sealant layer 16 is bonded to the second anticorrosion treatment layer 14b-side of the barrier layer 13 via the second adhesive layer 12b. The bonding method may be wet processing, dry lamination, or the like.

If wet processing is used, a solution or a dispersion of the adhesive forming the second adhesive layer 12b is applied to the second anticorrosion treatment layer 14b, and the solvent is vaporized at a predetermined temperature, followed by drying, which may be further followed by baking, if necessary, to thereby form a film. Then, the sealant layer 16 is laminated, thereby preparing the packaging material 10. The coating method may be any of the various coating methods mentioned above. The preferred dry coating weight of the second adhesive layer 12b is the same as that of the first adhesive layer 12a.

In this case, the sealant layer 16 can be produced, for example, using a resin composition for forming a sealant layer, containing a constituent component of the sealant layer 16 described above by using a melt extrusion molding machine. The processing rate of the melt extrusion molding machine may be set to 80 m/min or more from the viewpoint of productivity.

### (Step of Aging)

In the present step, the laminate is aged (cured). Aging of the laminate can expedite adhesion between the barrier layer 13 / the second anticorrosion treatment layer 14b / the second adhesive layer 12b / the sealant layer 16. Aging may be conducted in the range of room temperature to 100°C. Aging time may be, for example, 1 day to 10 days.

In this manner, the packaging material 10 of the present embodiment as shown in Fig. 1 can be produced.

Next, an example of a method of producing the packaging material 20 shown in Fig. 2 will be described. The method of producing the packaging material 20 is not limited to the following one.

The method of producing the packaging material 20 of the present embodiment includes a step of laminating the anticorrosion treatment layers 14a and 14b on respective sides of the barrier layer 13, a step of bonding the substrate layer 11 and the barrier layer 13 using the first adhesive layer 12a, a step of preparing a laminate by further laminating the adhesive resin layer 15 and the sealant layer 16, and, if necessary, a step of heating the resultant laminate. The steps up to the step of bonding the substrate layer 11 and the barrier layer 13 can be performed in the same manner as in the method of producing the packaging material 10.

### (Step of Laminating Adhesive Resin Layer 15 and Sealant Layer 16)

In the present step, the adhesive resin layer 15 and the sealant layer 16 are formed on the second anticorrosion treatment layer 14b formed in the previous step. The method includes sandwich-laminating the adhesive resin layer 15 together with the sealant layer 16 using an extrusion laminator. Further, tandem lamination or co-extrusion by which the adhesive resin layer 15 and the sealant layer 16 are extruded can also be used. The components of the adhesive resin layer 15 and the sealant layer 16 may be formulated, for example, to meet the above-mentioned configurations of the adhesive resin layer 15 and the sealant layer 16. The sealant layer 16 is formed by using the above resin composition for forming a sealant layer.

According to the present step, there can be obtained a laminate, as shown in Fig. 2, where the substrate layer 11 / the first adhesive layer 12a / the first anticorrosion treatment layer 14a / the barrier layer 13 / the second anticorrosion treatment layer 14b / the adhesive resin layer 15 / the sealant layer 16 are laminated in this order.

When laminating the adhesive resin layer 15, materials that are dry-blended so as to have the composition of the material formulation mentioned above may be directly laminated using an extrusion laminator. Alternatively, when laminating the adhesive resin layer 15, granules obtained in advance by melt-blending materials using a melt kneading device such as a single-screw extruder, twin-screw extruder or Brabender mixer may be laminated using an extrusion laminator.

When laminating the sealant layer 16, materials that are dry-blended so as to have the composition of the material formulation mentioned above, as a resin composition for forming a sealant layer, may be directly laminated using an extrusion laminator. Alternatively, when laminating the adhesive resin layer 15 and the sealant layer 16, granules obtained in advance by melt-blending materials using a melt kneading device such as a single-screw extruder, twin-screw extruder or Brabender mixer may be used to laminate the adhesive resin layer 15 and the sealant layer 16 by tandem lamination or co-extrusion using an extrusion laminator. Moreover, a sealant monolayer film may be formed in advance as a cast film using a resin composition for forming a sealant layer, and the film may be laminated by sandwich-lamination together with an adhesive resin. The formation rate (processing rate) of the adhesive resin layer 15 and the sealant layer 16 may be set to 80 m/min or more from the viewpoint of productivity.

### (Step of Heating)

In the present step, the laminate is heat-treated. Heat-treatment of the laminate can improve adhesion between the barrier layer 13 /the second anticorrosion treatment layer 14b / the adhesive resin layer 15 / the sealant layer 16. The heat-treatment is preferably performed at a temperature at least higher than the melting point of the adhesive resin layer 15.

In this manner, the packaging material 20 of the present embodiment as shown in Fig. 2 can be prepared.

Although the preferred embodiments of the power storage device packaging material of the present disclosure have been specifically described above, the present disclosure is not limited to the specific embodiments and can be modified or changed in various ways within the spirit of the present disclosure recited in the claims.

The power storage device packaging material of the present disclosure can be suitably used as a packaging material for power storage devices including, for example, secondary batteries such as a lithium-ion battery, a nickel-hydrogen battery and a lead storage battery, and electrochemical capacitors such as an electric double layer capacitor. In particular, the power storage device packaging material of the present disclosure is suitable as a packaging material for fully solid-state batteries using a solid electrolyte.

### [Power Storage Device]

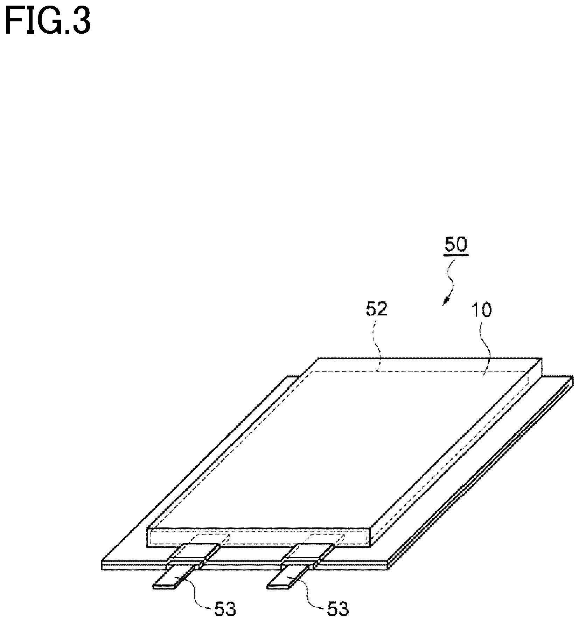

Fig. 3 is a perspective view of an embodiment of the power storage device produced by using the aforementioned packaging material. As shown in Fig. 3, a power storage device 50 includes a battery element (power storage device main body) 52, two metal terminals (current extraction terminals) 53 for externally extracting current from the battery element 52, and the packaging material 10 that contains the battery element 52 in a hermetically sealed state. The packaging material 10 is the aforementioned packaging material 10 according to the present embodiment. In the packaging material 10, the substrate layer 11 is the outermost layer and the sealant layer 16 is the innermost layer. That is, the packaging material 10 has a configuration in which a single laminate film is folded in half and heat-sealed, or two laminate films are overlapped with each other and heat-sealed, with the substrate layer 11 being on the outside of the power storage device 50 and the sealant layer 16 being on the inside of the power storage device 50, such that the battery element 52 is contained inside the packaging material 10. In the power storage device 50, the packaging material 20 may be used instead of the packaging material 10.

The battery element 52 is formed by interposing an electrolyte between a positive electrode and a negative electrode. The metal terminal 53 is a part of a current collector extending out from the packaging material 10, and made of a metal foil such as a copper foil or an aluminum foil.

The power storage device 50 of the present embodiment may be a fully solid-state battery. In this case, a solid electrolyte such as a sulfide solid electrolyte may be used as the electrolyte of the battery element 52. Since the power storage device 50 of the present embodiment uses the packaging material 10 of the present embodiment, excellent lamination strength can be achieved even when the power storage device 50 is used in a high temperature environment.

### [Power Storage Device Packaging Material]

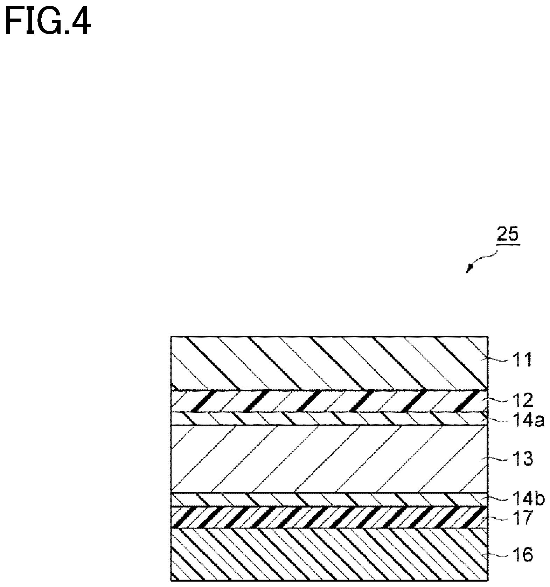

Fig. 4 is a schematic cross-sectional view of a power storage device packaging material of the present disclosure. As shown in Fig. 4, a packaging material (power storage device packaging material) 25 is a laminate including, in the following order, a substrate layer 11, a first adhesive layer 12 formed on a surface of the substrate layer 11, a barrier layer 13 formed on the first adhesive layer 12 on a side opposite to that facing the substrate layer 11, the barrier layer 13 provided with anticorrosion treatment layers 14a and 14b on respective sides, a second adhesive layer 17 formed on the barrier layer 13 on a side opposite to that facing the first adhesive layer 12, and a sealant layer 16 formed on the second adhesive layer 17 on a side opposite to that facing the barrier layer 13. The anticorrosion treatment layer 14a is provided on a surface of the barrier layer 13 facing the first adhesive layer 12, and the anticorrosion treatment layer 14b is provided on a surface of the barrier layer 13 facing the second adhesive layer 17. In the packaging material 25, the substrate layer 11 is the outermost layer and the sealant layer 16 is the innermost layer. In other words, the packaging material 25 is used with the substrate layer 11 being on the outside of the power storage device and the sealant layer 16 being on the inside of the power storage device.

### [Method of Producing Power Storage Device]

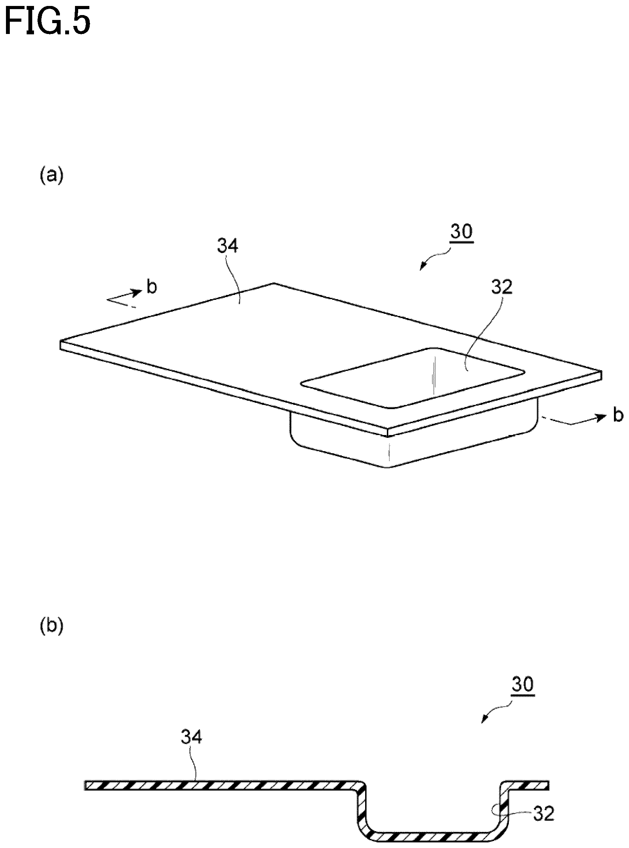

Next, a method of producing a power storage device using the packaging material 25 will be described. The following description will be given of an example in which a secondary battery 40 is produced using an embossed packaging material 30. Fig. 5 is a set of diagrams each illustrating the embossed packaging material 30. Fig. 6 is a set of diagrams (a) to (d), each being a perspective view of a process of producing a single-sided battery using the packaging material 25. The secondary battery 40 may be a double-sided battery produced by providing two packaging materials such as the embossed packaging materials 30, and bonding the packaging materials to each other while adjusting the alignment.

The secondary battery 40, which is a single-sided battery, can be produced through steps S21 to S26 below, for example.

Step S21: Providing a packaging material 25, a battery element 1 including electrodes, and leads 2 extending from the electrodes.

Step S22: Obtaining an embossed packaging material 30 by forming a recess 32 on one side of the packaging material 25 for accommodating the battery elements 1 (see Figs. 6(a) and 6(b)).

Step S23: Placing the battery element 1 in the formed area (recess 32) of the embossed packaging material 30, folding back the embossed packaging material 30 to cover the recess 32 with a cover portion 34, and heat-sealing one side of the embossed packaging material 30 so that the leads 2 extending from the battery element 1 are sandwiched and held by the packaging material (see Figs. 6(b) and 6(c)).

Step S24: Heat-sealing another side of the embossed packaging material 30, leaving one side other than the side where the leads 2 are sandwiched and held unsealed, injecting an electrolyte through the unsealed side, and heat-sealing the unsealed side in a vacuum (see Fig. 6(c)).

Step S25: Performing charging and discharging while setting the current value, voltage value, environmental temperature, etc., to predetermined values to induce chemical changes (chemical conversion).

Step S26: Trimming the ends of the heat-sealed sides other than the side where the leads 2 are sandwiched and held, and turning up the end portions towards the formed area (recess 32) (Fig. 6(d)).

### <Step S21>

At step S21, a packaging material 25, a battery element 1 including electrodes, and leads 2 extending from the electrodes are provided. The packaging material 25 is provided according to the embodiment described above. The battery element 1 and the leads 2 are not particularly limited, but a known battery element 1 and known leads 2 may be used.

### <Step S22>

At step S22, a recess 32 for accommodating the battery element 1 is formed by shaping the sealant layer 16-side of the packaging material 25. The recess 32 has a shape such as a rectangular shape in plan view conforming to the shape of the battery element 1. The recess 32 may be formed by, for example, pressing a pressing member having a rectangular pressing surface against part of the packaging material 25 in the thickness direction thereof. The position to be pressed, i.e., the position where the recess 32 is to be formed, is a position offset from the center of the packaging material 25, which has been cut in a rectangular shape, to one end of the packaging material 25 in the longitudinal direction. After the recess 32 is formed, the other end portion having no recess 32 is folded back to provide a cover (cover portion 34).

More specifically, the method of forming the recess 32 may be one using a die (deep drawing). The forming method may be one that uses a female die and a male die arranged with a gap equal to or greater than the thickness of the packaging material 25 therebetween, so that the male die together with the packaging material 25 is pressed into the female die. The depth (deep drawing degree) of the recess 32 can be adjusted as desired by adjusting the pressing amount of the male die. With the recess 32 being formed in the packaging material 25, an embossed packaging material 30 is obtained. The embossed packaging material 30 has a shape, for example, as illustrated in Fig. 2. Fig. 5(a) is a perspective view of the embossed packaging material 30 and Fig. 5(b) is a vertical cross-sectional view of the embossed packaging material 30 taken along the line b-b shown in Fig. 5(a).

### <Step S23>

At step S23, the battery element 1 including a cathode, a separator, an anode, and the like is disposed in the formed area (recess 32) of the embossed packaging material 30. The leads 2 extending from the battery element 1 and respectively joined to the cathode and the anode are drawn out of the formed area (recess 32). The embossed packaging material 30 is then folded back at the approximate center thereof in the longitudinal direction so that surfaces of the sealant layer 16 are located on the inside and overlaid with each other, followed by heat-sealing the side of the embossed packaging material 30 where the leads 2 are sandwiched and held. The heat-sealing is controlled by three conditions of temperature, pressure and time, which are appropriately set. The heat-sealing temperature is preferably not less than the temperature at which the sealant layer 16 is melted, and can be specifically 180°C or higher.

After the heat-sealing, a curing step is performed to heat the entire sealant layer 16. This promotes crystallization of the portions other than the heat-sealed portion so that the entire packaging material 25 has heat resistance. The curing step can be performed at 80°C to 150°C.

The thickness of the sealant layer 16 before being heat-sealed is preferably 40% or more and 80% or less of the thickness of the leads 2. With the thickness of the sealant layer 16 being not less than the lower limit, the resin constituting the sealant layer 16 tends to adequately fill the end portions of the leads 2. With the thickness of the sealant layer 16 being not more than the upper limit, the thickness of the end portions of the packaging material 25 of the secondary battery 40 can have a moderate thickness, reducing the amount of moisture penetrating from the end portions of the packaging material 25.

### <Step S24>

At step S24, a side of the packaging material is heat-sealed, leaving one side other than the side where the leads 2 are sandwiched and held unsealed. An electrolyte is then injected through the unsealed side, which is then heat-sealed in vacuum. The heat-sealing conditions are similar to those of step S23.

### <Step S25>

At step S25, the secondary battery 40 obtained at step S23 is charged and discharged to induce chemical changes (chemical conversion: for 3 days in 40°C environment). Then, the secondary battery 40 is opened once to remove gas generated by the chemical conversion and refill the electrolyte. Thereafter, final sealing is performed. Step S25 can be omitted.

### <Step S26>

The end portions of the heat-sealed sides except for the side where the leads 2 are sandwiched and held are trimmed to remove the portion of the sealant layer 16 extending out of the end portions. Then, the heat-sealed portions are turned up toward the formed area 32 to form turned-up portions 42. Thus, the secondary battery 40 is obtained.

Preferred embodiments of the power storage device packaging material of the invention have been specifically described above. However, the present invention should not be construed as limited to such specific embodiments, and can be modified or altered in various ways within the scope of the present invention recited in the claims.

### Examples

The present disclosure will be described below in more detail by way of examples. However, the present disclosure should not be limited to the following examples.

### <<First Examination>>

### [Materials Used]

Materials used in examples and comparative examples are described below.

### <Substrate Layer (25 µm Thickness)>

Ny: Nylon (Ny) film (manufactured by Toyobo Co., Ltd.) having one surface subjected to a corona treatment was used.

PET: a polyethylene terephthalate film having one surface subjected to a corona treatment was used.

### <First Adhesive Layer>

The base resin and the hardener shown in Table 1 were used to prepare a first adhesive. The hardener was blended with the base resin at the NCO/OH ratio or the epoxy group/OH shown in the table, and the mixture was diluted with ethyl acetate to the solid content of 26 mass%. When two types of hardeners were used, the hardeners were mixed so that the ratio of the NCO groups of each hardener relative to the total NCO groups of the hardener was the value shown in Table 1. The details of each component constituting the first adhesive are as follows.

### (Base Resin)

A-1: Polyester polyol (manufactured by Hitachi Chemical Company, Ltd., trade name: TESLAC 2505-63, hydroxyl group value: 7 to 11 mgKOH/g)
A-2: Acrylic polyol (manufactured by Taisei Fine Chemical Co., Ltd., trade name: 6KW-700, hydroxyl group value: 10 mgKOH/g)

### (Hardener)

B-1: Isocyanurate of isophorone diisocyanate (manufactured by Mitsui Chemicals, Inc., trade name: TAKENATE 600)
B-2: Adduct of tolylene diisocyanate (manufactured by Mitsui Chemicals, Inc., trade name: TAKENATE 500)
B-3: Adduct of hexamethylene diisocyanate (manufactured by Asahi Kasei Corp., trade name: DURANATE P301-75E)
B-4: Epoxy-based resin (manufactured by ADEKA Corporation, trade name: ADEKA RESIN EP4100)

### <First Anticorrosion Treatment Layer (Substrate Layer-side) and Second Anticorrosion Treatment Layer (Sealant Layer-side)>

(CL-1): A Sodium polyphosphate stabilized cerium oxide sol was used after being adjusted to a solid concentration of 10 mass% by using distilled water as a solvent. The sodium polyphosphate stabilized cerium oxide sol was obtained by formulating 10 parts by mass of Na salt of phosphoric acid per 100 parts by mass of cerium oxide.

(CL-2): A composition having 90 mass% of polyallylamine (manufactured by Nitto Boseki Co., Ltd) and 10 mass% of polyglycerol polyglycidyl ether (manufactured by Nagase Chemtex Corp.) was used after being adjusted to a solid concentration of 5 mass% using distilled water as a solvent.

### <Barrier Layer (40 µm Thickness)>

An annealed and degreased soft aluminum foil (8079 Material manufactured by Toyo Aluminum K.K.) was used.

### <Second Adhesive Layer (Coating Amount 3 g/m²)>

A polyurethane-based adhesive obtained by blending a polyisocyanate with an acid-modified polyolefin dissolved in a mixed solvent of toluene and methylcyclohexane was used.

### <Sealant Layer (80 µm Thickness)>

A polyolefin film (a non-stretched polypropylene film having a second adhesive layer-side surface subjected to a corona treatment) was used.

### [Production of Packaging Material]

### (Example A-1)

The barrier layer was dry laminated to the substrate layer using the first adhesive (first adhesive layer). For lamination of the barrier layer to the substrate layer, the first adhesive was applied to one surface of the barrier layer at a dry coating weight (mass per unit area) shown in Table 1, followed by drying at 80°C for 1 minute, and the surface was then laminated to the substrate layer. The laminate was aged at 80°C for 120 hours.

Then, a surface of the barrier layer on a side opposite to that facing the substrate layer was dry laminated to the sealant layer (80 µm thickness) using a polyurethane-based adhesive (second adhesive layer). For lamination of the barrier layer to the sealant layer, the polyurethane-based adhesive was applied to a surface of the barrier layer on a side opposite to that facing the substrate layer at a dry coating weight (mass per unit area) of 3 g/m², followed by drying at 80°C for 1 minute, and the surface was then laminated to the sealant layer. The laminate was aged at 120°C for 3 hours. By the method described above, a packaging material (laminate of the substrate layer / first adhesive layer / barrier layer / second adhesive layer / sealant layer) was produced.

### (Examples A-2 to A-16)

Packaging materials (laminates of the substrate layer / first adhesive layer / barrier layer / second adhesive layer / sealant layer) of Examples A-2 to A-16 were produced in the same manner as in Example A-1 except that at least one of the composition of the first adhesive and the coating amount of the first adhesive was changed as shown in Table 1.

### (Example A-17)

First, the first and second anticorrosion treatment layers were respectively provided on the barrier layer through the following procedure. That is, (CL-1) was applied to both surfaces of the barrier layer by micro gravure coating at a dry coating weight of 70 mg/m², followed by baking at 200°C in a drying unit. Next, (CL-2) was applied to the obtained layer by micro gravure coating at a dry coating weight of 20 mg/m², thereby forming a composite layer made of (CL-1) and (CL-2) as first and second anticorrosion treatment layers. The composite layer developed corrosion prevention performance by compounding two materials (CL-1) and (CL-2).

Next, the first anticorrosion treatment layer-side of the barrier layer provided with the first and second anticorrosion treatment layers was dry laminated to the substrate layer using the first adhesive (first adhesive layer). Next, the second anticorrosion treatment layer-side of the barrier layer provided with the first and second anticorrosion treatment layers was dry laminated to the sealant layer (80 µm thickness) using a polyurethane-based adhesive (second adhesive layer). The conditions for laminating the barrier layer and the substrate layer, and the conditions for laminating the barrier layer and the sealant layer were the same as those in Example A-1. By the method described above, a packaging material (laminate of the substrate layer / first adhesive layer / first anticorrosion treatment layer / barrier layer / second anticorrosion treatment layer / second adhesive layer / sealant layer) was produced.

### (Example A-18)

A packaging material (laminate of the substrate layer / first adhesive layer / first anticorrosion treatment layer / barrier layer / second anticorrosion treatment layer / second adhesive layer / sealant layer) of Example A-18 was produced in the same manner as in Example A-17 except that the substrate layer was changed to PET.

### (Comparative Examples A-1 to A-5)

Packaging materials (laminates of the substrate layer / first adhesive layer / barrier layer / second adhesive layer / sealant layer) of Comparative Examples A-1 to A-5 were produced in the same manner as in Example A-1 except that the composition of the first adhesive was changed as shown in Table 1.

### [Measurement of Lamination Strength]

### (Lamination Strength in Room Temperature Environment)

The packaging material was cut to a width of 15 mm, and the lamination strength between the barrier layer and the substrate layer in a room temperature environment (25°C) was measured by a 90 degree peel test using a tensile tester (manufactured by Shimadzu Corporation) under the condition of a tension rate of 50 mm/min. Based on the obtained lamination strength, evaluation was performed according to the following criteria. Table 2 shows the results.
A: Lamination strength is 6.0 N/15 mm or more.
B: Lamination strength is 4.5 N/15 mm or more and less than 6.0 N/15 mm.
C: Lamination strength is 3.0 N/15 mm or more and less than 4.5 N/15 mm.
D: Lamination strength is less than 3.0 N/15 mm.

### (Lamination Strength in High Temperature Environment)

The packaging material was cut to a width of 15 mm and left in a high temperature environment of 150°C for 5 minutes. Then, the lamination strength between the barrier layer and the substrate layer of the packaging material in the environment of 150°C was measured by a 90 degree peel test using a tensile tester (manufactured by Shimadzu Corporation) under the condition of a tension rate of 50 mm/min. Based on the obtained lamination strength, evaluation was performed according to the following criteria. Table 2 shows the results.
A: Lamination strength is 3.5 N/15 mm or more.
B: Lamination strength is 2.5 N/15 mm or more and less than 3.5 N/15 mm.
C: Lamination strength is 2.0 N/15 mm or more and less than 2.5 N/15 mm.
D: Lamination strength is less than 2.0 N/15 mm.

### [Evaluation of Deep Drawing Formability]

The drawing depth at which deep drawing was possible for the packaging material was evaluated by the following method. The packaging material was deep drawn with the drawing depth of the drawing device being set to 1.00 mm to 5.00 mm in steps of 0.25 mm. The presence or absence of breakage and pinholes in the sample after the deep drawing was visually checked by irradiating the packaging material with light to obtain a maximum drawing depth with which the packaging material has been successfully deep drawn causing neither breakage nor pinholes. The drawing depth was evaluated according to the following criteria. Table 2 shows the results.
A: The maximum drawing depth is 4.00 mm or more.
B: The maximum drawing depth is 3.50 mm or more and less than 4.00 mm.
C: The maximum drawing depth is 3.00 mm or more and less than 3.50 mm.
D: The maximum drawing depth is less than 3.00 mm.

### [Evaluation of Environmental Reliability]

The samples having the drawing depth of 2.00 mm (5 samples for each example) prepared in the above evaluation of deep drawing formability were left in an environment of 150°C for 1 week. Then, a portion of the sample near the convexity formed by deep drawing was irradiated with light to visually check whether delamination has occurred between the substrate layer and the barrier layer. The environmental reliability was evaluated according to the following criteria. Table 2 shows the results.
A: No delamination occurred in any of the 5 samples.
D: Delamination occurred in 1 or more of the 5 samples.

**[Table 1]**

| | First adhesive layer | | | | | | | Anticorr osion treatment layer | Substrate layer |
|---|---|---|---|---|---|---|---|---|---|
| | Base resin | Hardener | | Details of hardener (mol%) | | Hardener ratio | Coating amount | | |
| | | Harden er a | Harden er b | NCO (Hardene r a) | NCO (Hardene r b) | NCO/OH or Epoxy group/OH | g/m² | | |
| Example A-1* | A-1 | B-1 | - | 100 | - | 2 | 1.5 | None | Ny |
| Example A-2 | A-1 | B-1 | B-2 | 95 | 5 | 2 | 1.5 | None | Ny |
| Example A-3* | A-1 | B-1 | B-3 | 95 | 5 | 2 | 1.5 | None | Ny |
| Example A-4 | A-1 | B-1 | B-2 | 95 | 5 | 5 | 1.5 | None | Ny |
| Example A-5 | A-1 | B-1 | B-2 | 95 | 5 | 20 | 1.5 | None | Ny |
| Example A-6 | A-1 | B-1 | B-2 | 95 | 5 | 30 | 1.5 | None | Ny |
| Example A-7 | A-1 | B-1 | B-2 | 95 | 5 | 40 | 1.5 | None | Ny |
| Example A-8 | A-1 | B-1 | B-2 | 95 | 5 | 50 | 1.5 | None | Ny |
| Example A-9 | A-1 | B-1 | B-2 | 95 | 5 | 60 | 1.5 | None | Ny |
| Example A-10 | A-1 | B-1 | B-2 | 75 | 25 | 30 | 1.5 | None | Ny |
| Example A-11 | A-1 | B-1 | B-2 | 50 | 50 | 30 | 1.5 | None | Ny |
| Example A-12 | A-1 | B-1 | B-2 | 25 | 75 | 30 | 1.5 | None | Ny |
| Example A-13 | A-1 | B-1 | B-2 | 5 | 95 | 30 | 1.5 | None | Ny |
| Example A-14 | A-1 | B-1 | B-2 | 75 | 25 | 30 | 2.0 | None | Ny |
| Example A-15 | A-1 | B-1 | B-2 | 75 | 25 | 30 | 4.0 | None | Ny |
| Example A-16 | A-1 | B-1 | B-2 | 75 | 25 | 30 | 6.0 | None | Ny |
| Example A-17 | A-1 | B-1 | B-2 | 75 | 25 | 30 | 4.0 | Provided | Ny |
| Example A-18 | A-1 | B-1 | B-2 | 75 | 25 | 30 | 4.0 | Provided | PET |
| Compara tive example A-1 | A-2 | B-1 | - | 100 | - | 2 | 1.5 | None | Ny |
| Compara tive example A-2 | A-1 | B-2 | - | 100 | - | 2 | 1.5 | None | Ny |
| Compara tive example A-3 | A-1 | B-3 | - | 100 | - | 2 | 1.5 | None | Ny |
| Compara tive example A-4 | A-1 | B-4 | - | - | - | 1 | 1.5 | None | Ny |
| Compara tive example A-5 | A-2 | B-4 | - | - | - | 1 | 1.5 | None | Ny |

| | | | | | | | | | |
|---|---|---|---|---|---|---|---|---|---|
| * Reference example outside the scope of the claimed invention. | | | | | | | | | |

**[Table 2]**

| | Lamination Strength | | | | Deep drawing formability | | 150°C environment reliability | |
|---|---|---|---|---|---|---|---|---|
| | Room temperature environment | | 150°C environment | | Drawing depth (mm) | Evaluation | Number of occurrences of delamination | Evaluation |
| | N/15mm | Evaluation | N/15mm | Evaluation | | | | |
| Example A-1* | 4.0 | C | 2.1 | C | 3.25 | C | 0 | A |
| Example A-2 | 5.2 | B | 2.1 | C | 3.75 | B | 0 | A |
| Example A-3* | 3.8 | C | 2.0 | C | 3.25 | C | 0 | A |
| Example A-4 | 5.2 | B | 2.6 | B | 3.75 | B | 0 | A |
| Example A-5 | 5.1 | B | 3.4 | B | 3.75 | B | 0 | A |
| Example A-6 | 5.1 | B | 3.7 | A | 3.75 | B | 0 | A |
| Example A-7 | 4.6 | B | 3.3 | B | 3.75 | B | 0 | A |
| Example A-8 | 4.4 | B | 2.8 | B | 3.75 | B | 0 | A |
| Example A-9 | 4.1 | B | 2.5 | B | 3.75 | B | 0 | A |
| Example A-10 | 6.3 | A | 3.7 | A | 4.50 | A | 0 | A |
| Example A-11 | 6.7 | A | 3.5 | A | 4.50 | A | 0 | A |
| Example A-12 | 6.9 | A | 3.4 | B | 4.50 | A | 0 | A |
| Example A-13 | 7.1 | A | 2.9 | B | 4.50 | A | 0 | A |
| Example A-14 | 6.3 | A | 3.8 | A | 4.75 | A | 0 | A |
| Example A-15 | 6.5 | A | 3.9 | A | 5.00 | A | 0 | A |
| Example A-16 | 6.3 | A | 3.8 | A | 5.00 | A | 0 | A |
| Example A-17 | 6.9 | A | 3.9 | A | 5.00 | A | 0 | A |
| Example A-18 | 7.2 | A | 4.0 | A | 5.25 | A | 0 | A |
| Comparative example A-1 | 3.7 | C | 0.7 | D | 3.25 | C | 5 | D |
| Comparative example A-2 | 6.4 | A | 1.9 | D | 3.25 | C | 2 | D |
| Comparative example A-3 | 3.6 | C | 0.3 | D | 2.75 | D | 5 | D |
| Comparative example A-4 | 2.4 | D | 0.3 | D | 2.25 | D | 5 | D |
| Comparative example A-5 | 2.6 | D | 0.2 | D | 2.25 | D | 5 | D |

| | | | | | | | | |
|---|---|---|---|---|---|---|---|---|
| * Reference example outside the scope of the claimed invention. | | | | | | | | |

### [Industrial Applicability]

According to the present disclosure, a power storage device packaging material capable of exhibiting excellent lamination strength in both room temperature environment and high temperature environment and having excellent deep drawing formability, and a power storage device using the power storage device packaging material are provided.

### [Reference Signs List]

- 1: Battery element
- 2: Lead
- 10, 20, 25: Power storage device packaging material
- 11: Substrate layer
- 12a: First adhesive layer
- 12b: Second adhesive layer
- 13: Barrier layer
- 14a: First anticorrosion treatment layer
- 14b: Second anticorrosion treatment layer
- 15: Adhesive resin layer
- 16: Sealant layer
- 17: Second adhesive layer
- 30: Embossed packaging material
- 32: Formed area (recess)
- 34: Cover portion
- 40: Secondary battery
- 50: Power storage device
- 52: Battery element
- 53: Metal terminal

## Claims

1. A power storage device packaging material comprising:
a laminate at least including a substrate layer, a barrier layer, and a sealant layer, which are disposed in this order; and
an adhesive layer interposed between the substrate layer and the barrier layer, the adhesive layer containing a polyurethane-based compound made of a reaction product of at least one polyester polyol resin and at least one polyfunctional isocyanate compound, wherein
the polyfunctional isocyanate compound contains an isocyanurate of isophorone diisocyanate and an adduct of tolylene diisocyanate, and
wherein a ratio of a number of isocyanate groups derived from the isocyanurate of isophorone diisocyanate to a number of isocyanate groups derived from the adduct of tolylene diisocyanate contained in the polyfunctional isocyanate compound is 0.05 to 20.

2. The power storage device packaging material according to claim 1, wherein a ratio of a number of isocyanate groups contained in the polyfunctional isocyanate compound to a number of hydroxyl groups contained in the polyester polyol resin is 2 to 60.

3. The power storage device packaging material according to claim 1 or 2, wherein a mass per unit area of the adhesive layer is 2.0 g/m² to 6.0 g/m².

4. The power storage device packaging material according to any one of claims 1 to 3, wherein an anticorrosion treatment layer is provided on one or both surfaces of the barrier layer.

5. The power storage device packaging material according to any one of claims 1 to 4, wherein the substrate layer is made of a polyamide film or a polyester-based film.

6. A power storage device comprising:
a power storage device main body;
a current extraction terminal extending from the power storage device main body; and
the power storage device packaging material according to any one of claims 1 to 5, the power storage device packaging material sandwiching and holding the current extraction terminal and accommodating the power storage device main body.

7. A use of the packaging material according to any one of claims 1 to 6 with a fully solid-state battery.

## Patentansprüche

1. Energiespeichervorrichtungs-Verpackungsmaterial, das folgendes umfasst:
ein Laminat, das zumindest eine Substratschicht, eine Barriereschicht und eine Abdichtschicht, die in dieser Reihenfolge angeordnet sind, einschließt; und
eine Klebeschicht, die zwischen der Substratschicht und der Barriereschicht angeordnet ist, wobei die Klebeschicht eine Verbindung auf Polyurethan-Basis, die aus einem Reaktionsprodukt mindestens eines Polyesterpolyol-Harzes und mindestens einer polyfunktionellen Isocyanatverbindung hergestellt ist, enthält,
wobei die polyfunktionelle Isocyanatverbindung ein Isocyanurat von Isophorondiisocyanat und ein Addukt von Tolylen-Diisocyanat enthält und
wobei ein Verhältnis einer Zahl von Isocyanatgruppen, die aus dem Isocyanurat von Isophorondiisocyanat stammen, zu einer Zahl von Isocyanatgruppen, die aus dem Addukt von Tolylen-Diisocyanat, das in der polyfunktionellen Isocyanatverbindung enthalten ist, stammen, 0,05 bis 20 ist.

2. Energiespeichervorrichtungs-Verpackungsmaterial gemäß Anspruch 1, wobei ein Verhältnis einer Zahl von Isocyanatgruppen, die in der polyfunktionellen Isocyanatverbindung enthalten sind, zu einer Zahl von Hydroxylgruppen, die in dem Polyesterpolyol-Harz enthalten sind, 2 bis 60 ist.

3. Energiespeichervorrichtungs-Verpackungsmaterial gemäß Anspruch 1 oder 2, wobei eine Masse pro Einheitsfläche der Klebeschicht 2,0 g/m² bis 6,0 g/m² ist.

4. Energiespeichervorrichtungs-Verpackungsmaterial gemäß mindestens einem der Ansprüche 1 bis 3, wobei eine Antikorrosionsbehandlungsschicht an einer oder beiden Oberflächen der Barriereschicht vorgesehen ist.

5. Energiespeichervorrichtungs-Verpackungsmaterial gemäß mindestens einem der Ansprüche 1 bis 4, wobei die Substratschicht aus einem Polyamid-Film oder einem Film auf Polyesterbasis hergestellt ist.

6. Energiespeichervorrichtung, die folgendes umfasst:
einen Energiespeichervorrichtungs-Hauptkörper;
einen Stromentnahmeanschluss, der sich von dem Energiespeichervorrichtungs-Hauptkörper erstreckt; und
das Energiespeichervorrichtungs-Verpackungsmaterial gemäß mindestens einem der Ansprüche 1 bis 5, wobei das Energiespeichervorrichtungs-Verpackungsmaterial den Stromentnahmeanschluss sandwichartig umfasst und festhält, und den Energiespeichervorrichtungs-Hauptkörper aufnimmt.

7. Verwendung des Verpackungsmaterials gemäß mindestens einem der Ansprüche 1 bis 6 mit einer Vollfestkörperbatterie.

## Revendications

1. Matériau d'emballage de dispositif de stockage d'énergie comprenant :
un stratifié incluant au moins une couche de substrat, une couche barrière et une couche d'étanchéité, qui sont disposées dans cet ordre ; et
une couche adhésive interposée entre la couche de substrat et la couche barrière, la couche adhésive contenant un composé à base de polyuréthane constitué d'un produit réactionnel d'au moins une résine de polyester polyol et d'au moins un composé isocyanate polyfonctionnel, dans lequel
le composé isocyanate polyfonctionnel contient un isocyanurate de diisocyanate d'isophorone et un adduit de diisocyanate de tolylène, et
dans lequel un rapport d'un nombre de groupes isocyanate dérivés de l'isocyanurate de diisocyanate d'isophorone sur un nombre de groupes isocyanate dérivés de l'adduit de diisocyanate de tolylène contenus dans le composé isocyanate polyfonctionnel est de 0,05 à 20.

2. Matériau d'emballage de dispositif de stockage d'énergie selon la revendication 1, dans lequel un rapport d'un nombre de groupes isocyanate contenus dans le composé isocyanate polyfonctionnel sur un nombre de groupes hydroxyle contenus dans la résine de polyester polyol est de 2 à 60.

3. Matériau d'emballage de dispositif de stockage d'énergie selon la revendication 1 ou la revendication 2, dans lequel une masse par unité de surface de la couche adhésive est de 2,0 g/m² à 6,0 g/m².

4. Matériau d'emballage de dispositif de stockage d'énergie selon l'une quelconque des revendications 1 à 3, dans lequel une couche de traitement anticorrosion est disposée sur une ou les deux surfaces de la couche barrière.

5. Matériau d'emballage de dispositif de stockage d'énergie selon l'une quelconque des revendications 1 à 4, dans lequel la couche de substrat est constituée d'un film de polyamide ou d'un film à base de polyester.

6. Dispositif de stockage d'énergie comprenant :
un corps principal de dispositif de stockage d'énergie ;
une borne d'extraction de courant s'étendant à partir du corps principal de dispositif de stockage d'énergie ; et
le matériau d'emballage de dispositif de stockage d'énergie selon l'une quelconque des revendications 1 à 5, le matériau d'emballage de dispositif de stockage d'énergie prenant en sandwich et maintenant la borne d'extraction de courant et accueillant le corps principal de dispositif de stockage d'énergie.

7. Utilisation du matériau d'emballage selon l'une quelconque des revendications 1 à 6 avec une batterie entièrement solide.
